# EUROPÄISCHE PATENTSCHRIFT

(11) **EP 3 701 080 B1**
(45) Veröffentlichungstag und Bekanntmachung des Hinweises auf die Patenterteilung: **07.12.2022**
(21) Anmeldenummer: 18795400.3
(22) Anmeldetag: 23.10.2018
(51) Int. Cl.: D06F 34/18, G01N 27/04, D06F 101/04, D06F 101/06, D06F 103/04, D06F 103/06, D06F 103/10, D06F 105/56, D06F 105/58

(54) **VERFAHREN ZUR BESTIMMUNG VON WÄSCHEEIGENSCHAFTEN IN EINEM WÄSCHETROCKNER UND HIERFÜR GEEIGNETER WÄSCHETROCKNER**
METHOD FOR DETERMINING LAUNDRY PROPERTIES IN A TUMBLE DRYER AND TUMBLE DRYER SUITABLE THEREFOR
PROCÉDÉ PERMETTANT DE DÉTERMINER DES CARACTÉRISTIQUES DU LINGE DANS UN SÈCHE-LINGE ET SÈCHE-LINGE APPROPRIÉ POUR LEDIT PROCÉDÉ

(30) Priorität: 25.10.2017 DE 102017219053
(43) Veröffentlichungstag der Anmeldung: 02.09.2020
(73) Patentinhaber: BSH Hausgeräte GmbH, 81739 München (DE)
(72) Erfinder: BLANKEN, Maike, 13583 Berlin (DE); PRONOBIS, Wiktor, 14052 Berlin (DE); SCHLIECKER, Gudrun, 10967 Berlin (DE); VON DER WAYDBRINK, Ekkehard, 10627 Berlin (DE)
(86) Internationale Anmeldenummer: PCT/EP2018/078938
(87) Internationale Veröffentlichungsnummer: WO 2019/081448

(56) Entgegenhaltungen:
- EP-A1- 1 957 703
- EP-A2- 1 816 253
- EP-A2- 1 988 209
- WO-A1-2018/121850
- DE-A1- 4 243 594
- DE-A1- 10 200 975
- DE-A1- 19 939 274

## Beschreibung

Die Erfindung betrifft ein Verfahren zur Bestimmung von Wäscheeigenschaften in einem Wäschetrockner und einen hierfür geeigneten Wäschetrockner. Die Erfindung betrifft insbesondere ein Verfahren zur Bestimmung von Wäscheeigenschaften in einem Wäschetrockner mit einer horizontal drehbaren Wäschetrommel und einer Widerstandsmesseinrichtung mit zwei Messelektroden, sowie einer Steuerungseinheit, bei dem der elektrische Widerstand R(t) zwischen den Messelektroden bei sich drehender Wäschetrommel in Abhängigkeit von der Zeit t gemessen wird. Die Erfindung betrifft auch einen Wäschetrockner, der zur Durchführung des Verfahrens eingerichtet ist.

Bei Wäschetrocknern wird im Allgemeinen ein Feuchtigkeitsgehalt der Wäsche, einfach auch Wäschefeuchte genannt, mittels einer elektrischen Widerstandsmessung ermittelt. Die in einer entsprechenden Widerstandsmesseinrichtung verwendeten Messelektroden sind dabei meist im Lagerschild oder in der Trommel angeordnet. Beispielsweise können die Messelektroden zwei Metallstreifen sein, die parallel zueinander an einer unteren Türöffnungskante in dem Lagerschild angebracht sind.

Zur Widerstandsmessung wird ausgenutzt, daß die Wäsche die Messelektroden elektrisch überbrückt. Der elektrische Widerstand der Wäsche ist im wesentlichen von der Menge des in der Wäsche gebundenen Wassers abhängig. Je trockener die Wäsche wird, desto größer wird ihr elektrischer Widerstand. Zur Widerstandsmessung sind unterschiedliche Methoden bekannt.

Der Trockengrad der Wäsche kann aus einem gefilterten, geglätteten Messsignal(en) bestimmt werden, z.B. mittels einer Kennlinie.

So ist in der Veröffentlichung EP 2 593 601 B1 ein Verfahren zum Betreiben eines Wäschetrockners zum Trocknen von Wäsche beschrieben, bei dem eine solche Messung durchgeführt wird.

Die Veröffentlichung EP 1 988 209 A2 offenbart ebenfalls ein solches Verfahren.

Die Veröffentlichung WO 2012/007299 A1 offenbart ein Verfahren zum Betreiben eines Wäschetrockners, wobei unter Berücksichtigung eines Salzgehaltes von Feuchte ein Feuchtegehalt von Wäsche durch Messen eines durch die Wäsche fließenden Stroms bestimmt wird, sowie ein zur Durchführung dieses Verfahrens eingerichteter Wäschetrockner.

Die Veröffentlichung EP 0 926 292 B1 beschreibt ein anderes Verfahren zum Bestimmen des Trocknungsfortganges in einem Trocknungsgang. Bei diesem Verfahren wird die Feuchtigkeit der Prozeßluft überwacht.

Die EP 1 957 703 A1 offenbart ein Verfahren bei dem ein Wäsche Feuchte Mittelwert zu Beginn des Trocknungszyklus ermittelt wird und dann aus diesem der exakte Wäschefeuchte Wert berechnet wird. Aus diesem wird dann die maximale Trocknungszeit oder Resttrocknungszeit ermittelt.

In einer Ausführungsform des Verfahrens wird die Steigung des Verlaufs der Entwicklung der relativen Feuchtigkeit der Prozeßluft gemessen, um die Art des zu trocknenden Produkts und dessen Trocknungsmerkmale zu berücksichtigen.

Eine Erkennung der Beladung, d.h. die Masse der Wäsche in der Wäschetrommel kann mit Hilfe von Beladungssensoren durchgeführt werden, welche das Gewicht der Wäschetrommel messen. Dabei ist nachteilig, daß sich bei reinen Trocknern ein Wasseranteil und Wäscheanteil an der Beladung nicht unterscheiden lässt.

Eine Beladungserkennung kann auch über eine Auswertung von Motorkennwerten eines bürstenlosen Gleichstrommotors (BLDC-Motors) durchgeführt werden.

Es ist vor diesem Hintergrund Aufgabe der vorliegenden Erfindung, ein verbessertes Verfahren zur Bestimmung von Wäscheeigenschaften bereitzustellen. Vorzugsweise sollen dabei die Feuchte der Wäsche, die Wäscheart und/oder die Trocken-Beladung mit Wäsche bestimmt werden können, so daß ein Trocknungsprozess sorgfältig überwacht, der Prozeß ggf. angepaßt und eine Trocknungszeit möglichst genau vorhergesagt werden kann. Aufgabe der vorliegenden Erfindung ist außerdem die Bereitstellung eines zur Durchführung dieses Verfahrens geeigneten Wäschetrockners.

Die Lösung dieser Aufgabe wird nach dieser Erfindung erreicht durch ein Verfahren zur Bestimmung von Wäscheeigenschaften in einem Wäschetrockner sowie einen Wäschetrockner mit den Merkmalen der jeweiligen unabhängigen Patentansprüche. Bevorzugte Ausführungsformen des erfindungsgemäßen Verfahrens sind in abhängigen Patentansprüchen aufgeführt, wobei bevorzugten Ausführungsformen des erfindungsgemäßen Verfahrens bevorzugte Ausführungsformen des erfindungsgemäßen Wäschetrockners entsprechen, selbst wenn dies hierin nicht ausdrücklich festgestellt ist.

Gegenstand der Erfindung ist somit ein Verfahren zur Bestimmung von Wäscheeigenschaften in einem Wäschetrockner mit einer horizontal drehbaren Wäschetrommel und einer Widerstandsmesseinrichtung mit zwei Messelektroden, sowie einer Steuerungseinheit, bei dem
a) der elektrische Widerstand R(t) zwischen den Messelektroden bei sich drehender Wäschetrommel in Abhängigkeit von der Zeit t gemessen wird;
b) der in Abhängigkeit von der Zeit t gemessene elektrische Widerstand R(t) über einen vorgegebenen Zeitraum Δt gemittelt und als zeitabhängiger Widerstandsmittelwert Rm(t) registriert wird;
c) der zeitabhängige Widerstandsmittelwert Rm(t) in Hinblick auf einen anfänglichen Widerstandsmittelwert Rs und/oder eine zeitliche Änderung ΔRm/Δt des zeitabhängigen Widerstandsmittelwertes Rm(t) ausgewertet wird;
d) der im Schritt (c) bestimmte bestimmte anfängliche Widerstandsmittelwert Rₛ und/oder die im Schritt (c) bestimmte zeitliche Änderung ΔRm/Δt des zeitabhängigen Widerstandsmittelwertes Rm hinsichtlich einer anfänglichen Wäschefeuchte Hs; einer Wäscheart und/oder einer restlichen Trocknungszeit ausgewertet wird.

Im Schritt (a) wird somit insbesondere der elektrische Widerstand R(t) von in der Wäschetrommel befindlicher Wäsche W zwischen den Messelektroden bei sich drehender Wäschetrommel in Abhängigkeit von der Zeit t gemessen.

Unter Wäscheart wird im Sinne dieser Beschreibung die Zusammensetzung eines Wäschepostens, also einer Menge an Wäsche, die zusammen gewaschen oder getrocknet wird, hinsichtlich insbesondere der Faserart (Baumwolle, Synthetik, Wolle, Mischgewebe etc.), im weiteren Sinne aber auch der Gewebeart, verstanden. Die Wäscheart wird bei herkömmlichen Wäschebehandlungsgeräten hauptsächlich durch den Benutzer anhand der Programmauswahl vorgegeben und bestimmt die Parameter im Wasch- und Trockenprozeß.

Im Schritt (b) wird durch eine Mittelwertbildung Rₘ(t) eine Glättung der Kurve des zeitabhängigen Widerstands R(t) erreicht, um trotz der großen Schwankungen des Widerstands aufgrund der Bewegung der Wäsche in der Wäschetrommel zu wichtigen Informationen aus den gemessenen Werten des Widerstands zu kommen. Der Mittelwert Rₘ(t) ist bevorzugt als akkumulierter Mittelwert gebildet, d.h. so, daß über einen Zeitraum ab einem festgelegten Startzeitpunkt gemittelt wird. Der Startzeitpunkt kann der Beginn der Messung, z.B. am Start des Trocknungsprozesses, oder ein Zeitpunkt nahe des Prozessbeginns, relativ zur Länge des gesamten Prozeßes sein. Bevorzugt stellt also der zeitabhängige Mittelwert Rₘ(t) das Integral über das Meßsignal R(t) ab Start der Messung bis zum Zeitpunkt t dar. Der zeitliche Startwert für die Mittelwertbildung muß aber nicht unbedingt mit dem Start der Messung zusammenfallen, sondern kann auch später liegen, z.B. weil die ersten Meßwerte wegen zu starker Schwankungen unbrauchbar sind oder sich Inkonsistenzen ergeben.

Im Schritt (c) wird der zeitabhängige Widerstandsmittelwert Rₘ(t) in Hinblick auf einen anfänglichen Widerstandsmittelwert Rs und/oder eine zeitliche Änderung ΔRm/Δt des zeitabhängigen Widerstandsmittelwertes Rₘ(t) ausgewertet. Es hat sich gezeigt, daß bereits und insbesondere der Widerstandswert zu Beginn des Trocknungsprozesses Informationen über die Wäscheeigenschaften liefern kann.

Der zeitabhängige Widerstandsmittelwert Rₘ(t) ist zu Beginn der Messung, noch mit Schwankungen behaftet, wird mit fortschreitender Dauer der Messreihe aber infolge der Mittelwertbildung stabiler. Es wird daher ein anfänglicher Widerstandsmittelwert Rs gebildet, der ausreichend stabil ist, um zuverlässige Informationen zu liefern, aber noch ausreichend nahe am Beginn des Prozesses liegt, um die Anfangsbedingungen abzubilden. Bevorzugt wird dazu zu einem bestimmten Zeitpunkt tₛₑₜ, z.B. 1000 Sekunden nach Beginn eines Trocknungsprozesses, der Widerstandsmittelwert Rₛ=Rₘ(tₛₑₜ) gebildet. Der bis dahin vergangene Zeitraum wird auch als Einschwingphase bezeichnet, nach der besonders verlässliche Widerstandsmittelwerte Rₘ(t) erhalten werden.

Weitere Informationen über die Wäscheeigenschaften werden aus der zeitliche Änderung ΔRm/Δt des zeitabhängigen Widerstandsmittelwertes Rₘ(t) erhalten, wie weiter unten detaillierter beschreiben ist.

Es hat sich gezeigt, daß sowohl der anfängliche Widerstandsmittelwert Rₛ als auch die zeitliche Änderung ΔRₘ/Δt des zeitabhängigen Widerstandsmittelwertes Rₘ(t) jeweils einzeln, wie auch in Kombination charakteristisch für eine anfänglichen Wäschefeuchte Hₛ, eine Wäscheart und/oder eine restliche Trocknungszeit sein können und daher auf diese Wäscheeigenschaften und die zu erwartende Trocknungsdauer hin ausgewertet werden können.

Gemäß der Erfindung wird der in Abhängigkeit von der Zeit gemessene elektrische Widerstand R(t) in ein Frequenzspektrum transformiert und in dem Frequenzspektrum eine Maximumfrequenz fₘ bestimmt. Vorteilhaft wird dazu das Leistungsdichtespektrum bestimmt. Das Frequenzspektrum, in welches der in Abhängigkeit von der Zeit gemessene elektrische Widerstand R(t) transformiert wird, gibt insbesondere eine Frequenz der Kontaktierung der zwei Messelektroden durch die sich in der Wäschetrommel bewegende Wäsche wieder. Diese, durch den charakteristischen Wäschefall bestimmte Frequenz, zeigt sich im Frequenzspektrum als ausgeprägtes erstes Maximum bei der Maximumfrequenz fₘ. Darüber hinaus kann das Frequenzspektrum höhere Harmonische dieser Frequenz zeigen. Die Maximumfrequenz liegt in der Nähe der Trommeldrehfrequenz f_{d}, aber, charakteristischerweise von der Beladung abhängig, darüber. Daher ist für die Ermittlung der Maximumfrequenz fₘ eine möglichst konstante Trommeldrehzahl vorteilhaft.

Gemäß der Erfindung wird für eine vorgegebene anfängliche Wäschefeuchte Hₛ die Wäscheart durch Auswertung des anfänglichen Widerstandsmittelwert Rₛ und der Maximumfrequenz fₘ bestimmt. Dabei ist im Allgemeinen beispielsweise in der Steuerungseinheit für verschiedene anfängliche Wäschefeuchten Hₛ und verschiedene Wäschearten ein Zusammenhang zwischen dem anfänglichen Widerstandsmittelwert Rₛ und der Maximumfrequenz fₘ hinterlegt. Vorteilhaft kann dieser Zusammenhang auch außerhalb des Wäschetrockners, beispielsweise auf einem externen Server hinterlegt sein.

Erfindungsgemäß ist es bevorzugt, daß eine anfängliche Wäschefeuchte Hₛ anhand eines Schleuderprofiles in einem vorangegangenen Waschvorgang bestimmt worden.

In einer anderen Ausführungsform des erfindungsgemäßen Verfahrens wird die anfängliche Wäschefeuchte Hₛ über die Auswertung der Differenz zwischen einer Masse Mₕ von eingebrachter feuchter Wäsche und der Beladung M_{dry} der Wäschetrommel mit trockener Wäsche erhalten. Die anfängliche Wäschefeuchte Hₛ kann durch die Differenz zwischen der Masse Mₕ von eingebrachter feuchter Wäsche und der Masse M_{dry} an trockener Wäsche bestimmt werden, wobei die Wäschefeuchte Hₛ auch als relative Wäschefeuchte ausgedrückt werden kann. Die Masse M_{dry} der trockenen Wäsche kann beispielsweise vom Benutzer eingegeben, oder vor einem Waschgang ermittelt worden sein, z.B. durch Wiegen oder ein anderes Beladungserfassungsverfahren, insbesondere wenn der Wäschetrockner auch ein zum Waschen geeignetes Gerät (Waschtrockner) ist, oder das Waschgerät über eine Möglichkeit zur Datenübertragung zum Wäschetrockner verfügt.

Die Masse Mₕ von eingebrachter feuchter Wäsche kann beispielsweise durch Auswägen der Wäschetrommel gemessen werden.

In einer Weiterbildung des Verfahrens kann für die Bestimmung der Wäscheart zusätzlich die zeitliche Änderung ΔRₘ/Δt des zeitabhängigen Widerstandsmittelwertes Rₘ(t) herangezogen werden.

Gemäß der Erfindung wird für eine vorgegebene Wäscheart ein Zusammenhang zwischen dem anfänglichen Widerstandsmittelwert Rₛ und der Maximumfrequenz fm in Hinblick auf eine anfängliche Wäschefeuchte Hs und die Trockenmasse M_{dry} ausgewertet. Dabei ist in der Steuerungseinheit oder extern im Allgemeinen für anfängliche Wäschefeuchten Hs und verschiedene Wäschearten ein Zusammenhang zwischen dem Mittelwert Rₘ(t) des Widerstands und der Maximumfrequenz fm sowie der Trockenmasse hinterlegt. "Vorgegebene Wäscheart" bedeutet beispielsweise, daß die Wäscheart automatisch durch Anwendung eines IR-Spektrometers ermittelt oder durch einen Benutzer des Wäschetrockners eingegeben werden kann.

In einer vorteilhaften Weiterentwicklung wird für ein ausgewähltes Trocknungsprogramm unter Berücksichtigung der Wäscheart, der Beladung M_{dry} der Wäschetrommel mit trockener Wäsche und der anfänglichen Wäschefeuchte Hₛ die Trocknungszeit ermittelt und einem Benutzer des Wäschetrockners angezeigt. Hierzu ist im Wäschetrockner im Allgemeinen eine optische und/oder akustische Anzeigeeinheit vorhanden.

Gemäß einer weiteren vorteilhaften Ausführungsform der Erfindung ist ein Verfahren bei dem die anfängliche Wäschefeuchte Hs, die Beladung M_{dry} der Wäschetrommel mit trockener Wäsche und die Wäscheart durch die Auswertung der Maximumfrequenz fm, anfänglichen Widerstandsmittelwertes Rₛ und der zeitlichen Änderung ΔRm/Δt des zeitabhängigen Widerstandsmittelwertes Rₘ(t) ermittelt werden.

Beim erfindungsgemäßen Verfahren wird die Wäschetrommel vorzugsweise mit einer konstanten Drehzahl n betrieben. Dabei wird die Wäschetrommel vorzugsweise zum Aufnehmen des zeitlichen Verlaufs des elektrischen Widerstands R(t) mit einer konstanten Soll-Drehzahl betrieben, insbesondere solange die Werte des elektrischen Widerstand R(t) gemessen werden, aus denen das Frequenzspektrum bestimmt werden soll. Dies ermöglicht vorteilhafterweise eine besonders scharfe Lage der Frequenzspitzen, d.h. der Maximumfrequenzen fₘ, und damit eine besonders genaue Bestimmung der Beladung M_{dry} mit trockner Wäsche.

Dieses Verfahren nutzt den überraschenden Effekt aus, daß die Lage der Maximumfrequenz fₘ im Frequenzspektrum unabhängig von der Anfangsfeuchtigkeit der Wäsche, der Prozesslufttemperatur und der Wasserzusammensetzung (z.B. Leitfähigkeit, Härte, ...) ist.

Die vorliegende Erfindung nutzt überdies den Umstand aus, daß der über die Zeit gemessene elektrische Widerstand an den Messelektroden nicht nur allein durch die Trockenmasse und Feuchte der Wäsche in der Wäschetrommel bestimmt wird, sondern auch durch die Wäscheart. Für unterschiedliche Wäschearten verbindet sich Wasser unterschiedlich mit deren Fasern. Naturfasern wie z.B. Baumwolle leiten einen Teil des Wassers in die Faser und gehen dort Wasserstoffbrückenbindungen ein. Das restliche Wasser ist Oberflächenwasser, das über Wasserstoffbrückenbildung und Kapillarkräfte an die Außenseite der Faser gebunden ist. Dieses Wasser steht zur Überbrückung der Messelektroden zur Verfügung und bestimmt daher im Wesentlichen die elektrische Leitfähigkeit feuchter Wäsche. Bei synthetischen Fasern ist sämtliches Wasser an der Faseroberfläche gebunden und steht zur Überbrückung der Elektroden zur Verfügung. Bei gleicher Wäschemenge und Wassermenge unterscheidet sich die elektrische Leitfähigkeit bei unterschiedlichen Wäschearten.

Dieser Umstand schlägt sich im über einen Zeitraum Δt ab Start ermittelten, akkumulierten Mittelwert Rₘ(t) des Widerstands nieder. Zu Beginn eines Trocknungsprogramms ist der Widerstand am niedrigsten und wächst kontinuierlich mit zunehmender Durchtrocknung der Wäsche. Vergleicht man beispielsweise verschieden große Wäscheposten aus Baumwolle mit einer relativen Feuchtigkeit von 60%, so schlägt sich der höhere Wassergehalt zu Beginn der Trocknung eines 4 kg-Wäschepostens in der Häufung deutlich niedriger Widerstandswerte dar. Dies führt zu einer Absenkung des Mittelwertes nach z.B. 1000 s, also nach einer im Allgemeinen vorgegebenen Einschwingphase. Demgegenüber liegen die von den Messelektroden ermittelten Werte des elektrischen Widerstands für einen 3,5 kg-Wäscheposten gleicher relativer Anfangsfeuchte mit Synthetikwäsche deutlich niedriger. Dieser entspricht dem Wert für einen Wäscheposten aus Baumwolle mit der gleichen relativen Anfangsfeuchte von 60% und einer deutlich größeren Trockenmasse von 8 kg. Der aus der großen Trockenmasse resultierende hohe Wassergehalt zu Beginn führt zu einer langen Trocknungsdauer, weshalb der Widerstandsmittelwert z.B. in den ersten 100 Minuten eines Trocknungsprogrammes kaum ansteigt.

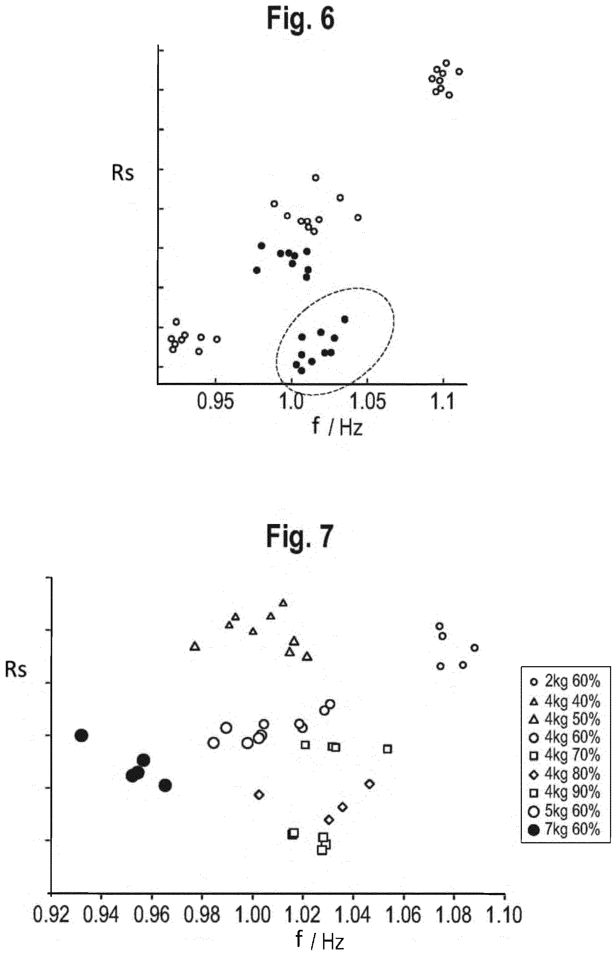

Die Erfindung ermöglicht die Unterscheidung von Wäschearten bei gleicher Anfangsfeuchte, indem die aus dem Widerstandsmittelwert gewonnene Information mit der Bestimmung der Maximumfrequenz fₘ der 1. Harmonischen kombiniert wird. Ein Beispiel für diese Anwendung ist unten zu Fig. 6 diskutiert. Die Anfangsfeuchte eines zu trocknenden Wäschepostens kann beispielsweise bekannt sein durch Informationen über das Schleuderprofil im vorangegangenen Waschvorgang. Je stärker darin geschleudert und je mehr Wasser abgepumpt wird, desto geringer wird die Anfangsfeuchte sein.

Andererseits ist bei gleicher Wäscheart, welche beispielsweise durch einen Benutzer des Wäschetrockners eingegeben werden kann oder aber automatisch beispielsweise durch ein IR-Spektrometer bestimmt werden kann, eine Unterscheidung und Bestimmung der Anfangsfeuchten möglich. Dies kann durch eine Auswertung des Zusammenhangs zwischen dem Widerstandsmittelwert Rₘ(t), vorzugsweise nach einer vorgegebenen Einschwingphase, und der Maximumfrequenz der 1. Harmonischen erreicht werden. Ein Beispiel für diese Anwendung ist unten zu Fig. 7 diskutiert.

Die für die Auswertungen benutzten Zusammenhänge können z.B. experimentell und/oder empirisch bestimmt worden sein. Folglich kann beispielsweise eine aktuell bestimmte Maximumfrequenz fm mit empirisch bestimmten Maximumfrequenzen verglichen werden und als die Beladung M_{dry} derjenige Wert verwendet werden, dessen empirisch bestimmte Maximumfrequenz am nächsten an dem aktuell bestimmten Maximum liegt.

Die Messwerte des elektrischen Widerstands R(t) können auf grundsätzlich bekannte Weise bestimmt werden, z.B. nach den beiden eingangs beschriebenen Methoden. So ist es eine Ausführungsform, daß die Messung des elektrischen Widerstands mittels Anlegens eines rechteckigen Wechselspannungssignals an die Messelektroden durchgeführt wird.

Vorzugsweise werden die Messwerte mit einer konstanten Wiederholdauer aufgenommen bzw. die Widerstandswerte mit einer konstanten Wiederholdauer gemessen, z.B. werden mehrere Messwerte pro Sekunde aufgenommen.

Beim erfindungsgemäßen Verfahren wird die Wäschetrommel vorzugsweise mittels eines bürstenlosen Gleichstrommotors angetrieben. Dieser hat den Vorteil, daß mit seiner Hilfe eine Ist-Drehzahl der Wäschetrommel an oder nahe an der Soll-Drehzahl gehalten werden kann. Dies ermöglicht mit einfachen Mitteln eine besonders scharfe Lage der Frequenzspitzen und damit eine besonders genaue Bestimmung der Beladung.

Gegenstand der Erfindung ist außerdem ein Wäschetrockner, bei dem die Steuerungseinheit zur Durchführung der hierin beschriebenen Verfahren eingerichtet ist. Der Wäschetrockner kann ein Wäschetrockner an sich oder ein kombiniertes Wasch- und Wäschetrocknungsgerät ("Waschtrockner") sein. Der Wäschetrockner kann ein Umluftoder ein Abluftgerät sein. Der Wäschetrockner kann eine Wärmepumpe aufweisen. Die Wäschetrommel ist im Allgemeinen frontseitig mit Wäsche beschickbar. Als Wäschetrockner wird für die Erfindung auch ein Wäschepflegegerät verstanden, welches geeignet ist, Wäsche nicht nur zu trocknen, also z.B. ein Waschtrockner.

Der Wäschetrockner der Erfindung hat insbesondere eine horizontal drehbare Wäschetrommel und eine Widerstandsmesseinrichtung mit zwei Messelektroden, sowie eine Steuerungseinheit, welche eingerichtet ist zur Durchführung eines der vorgenannten Verfahren. Die Widerstandsmesseinrichtung weist Messelektroden auf. Diese können beispielsweise in einem Lagerschild oder in der Wäschetrommel angeordnet sein.

Beispielsweise können die Messelektroden zwei Metallstreifen sein, die parallel zueinander an einer unteren Türöffnungskante in dem Lagerschild angebracht sind.

Die Erfindung hat zahlreiche Vorteile. So kann eine verbesserte Automatisierung eines im Wäschetrockner durchgeführten Trocknungsprozesses erreicht werden. Die Programmauswahl und damit die Bedienung des Wäschetrockners werden erleichtert. Überdies wird eine verbesserte Restzeitangabe für die Dauer eines Trocknungsprogrammes insbesondere auch zu Beginn eines Trocknungsprogrammes möglich. Der Trocknungsprozess kann während des Trocknens entsprechend angepasst werden, indem z.B. die Prozesstemperaturen, die Abschaltwerte und die Restlaufzeiten angepasst werden. Insgesamt ist ein zuverlässigeres Erreichen der Trocknungsziele bei der zu trocknenden feuchten Wäsche möglich. Ein gewünschter Trocknungsgrad kann unabhängig von der Wäscheart, Wäschemenge und Wäschelage in der Wäschetrommel zumindest zufriedenstellend und gleichmäßig erreicht werden. All dies ist ohne bauliche Veränderungen am Wäschetrockner möglich und ohne daß zusätzliche Sensoren z.B. Beladungssensoren oder IR-Sensoren erforderlich sind.

Die Erfindung wird im Folgenden anhand der schematischen Figuren 1 bis 7 näher beschrieben, worin die beschriebenen Ausführungsformen lediglich der Illustration dienen und nicht einschränkend verstanden werden dürfen.
- Fig. 1.: zeigt als Schnittdarstellung in Seitenansicht einen Wäschetrockner mit einer horizontal drehbaren Wäschetrommel;
- Fig. 2.: (a)-(d) zeigen als Schnittdarstellung in Frontansicht die mit viel Wäsche beladene Wäschetrommel in mehreren Drehstellungen;
- Fig. 3.: (a)-(d) zeigen als Schnittdarstellung in Frontansicht die mit wenig Wäsche beladene Wäschetrommel in mehreren Drehstellungen;
- Fig. 4.: zeigt Frequenzspektren bei unterschiedlicher Beladung;
- Fig. 5.: zeigt für unterschiedlich große Beladungen der Wäschetrommel mit Wäsche sowie unterschiedliche Wäschearten bei gleicher relativer Anfangsfeuchte Hᵣₑₗ die Änderung des Widerstandsmittelwertes Rₘ(t) in Abhängigkeit von der Zeit t;
- Fig. 6.: zeigt für unterschiedliche Beladungen mit Wäsche gleicher relativer Anfangsfeuchte den Zusammenhang zwischen dem anfänglichen Widerstandsmittelwert Rₛ nach einer Einschwingphase und der Maximumfrequenz fₘ; und
- Fig. 7.: zeigt für unterschiedliche Beladungen mit Wäsche gleicher Wäscheart, hier Baumwolle, aber unterschiedlicher relativer Anfangsfeuchte, den Zusammenhang zwischen dem anfänglichen Widerstandsmittelwert Rₛ nach einer Einschwingphase und der Maximumfrequenz fₘ.

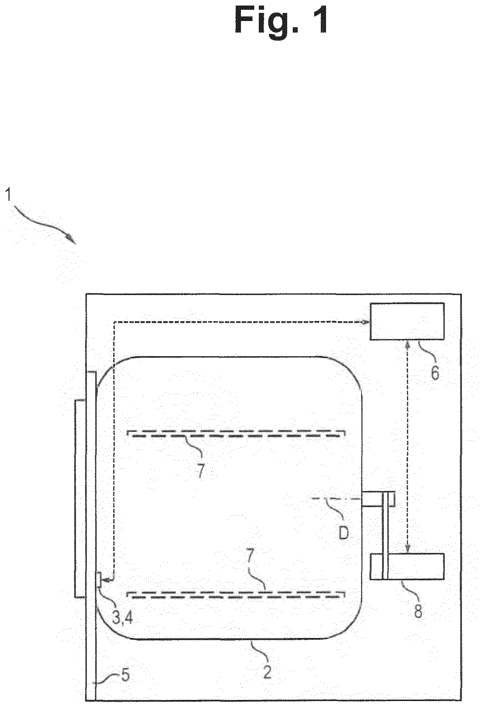

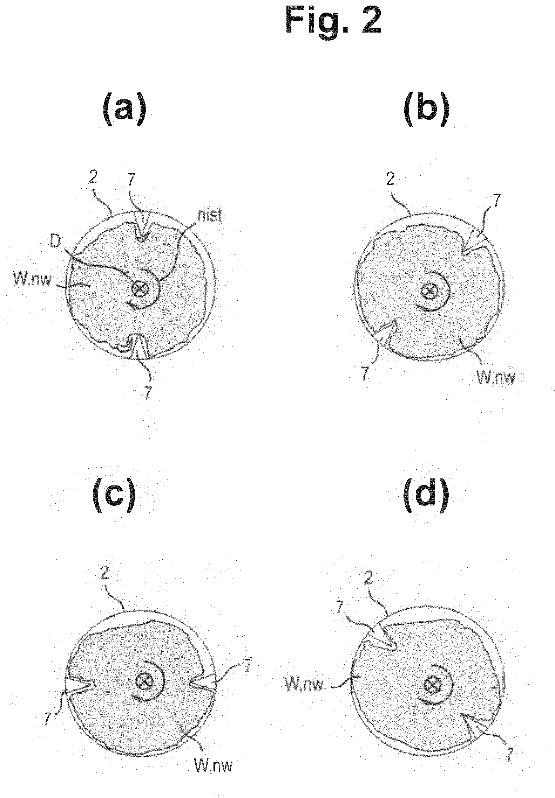

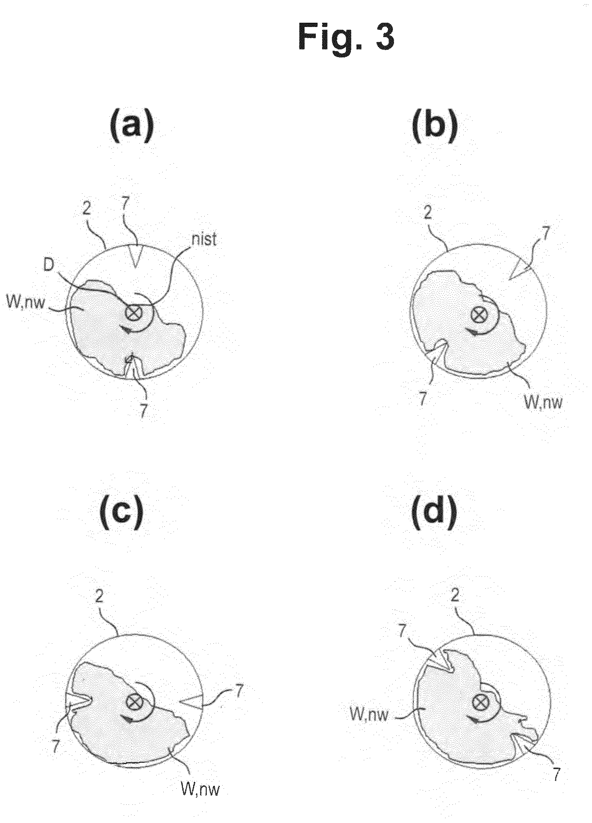

Fig.1 zeigt als Schnittdarstellung in Seitenansicht einen Wäschetrockner 1 mit einer horizontal drehbaren Wäschetrommel 2, in welcher sich zu trocknende Wäsche W befindet (siehe Fig. 2 (a) - (d) und Fig. 3 (a) - (d)). Der Wäschetrockner 1 weist ferner eine Widerstandsmesseinrichtung 3 zum Messen eines elektrischen Widerstands der Wäsche W auf, welche zwei zur Berührung mit der Wäsche W angeordnete Messelektroden 4 aufweist, die an einer unteren Türöffnungskante in einem frontseitigen Lagerschild 5 angebracht ist.

Der Wäschetrockner 1 ist dazu eingerichtet, an die Messelektroden 4 eine Gleichspannung oder eine Wechselspannung anzulegen. Die Widerstandsmesseinrichtung 3 ist mit einer Steuerungseinheit 6 verbunden, welche den Betrieb des Wäschetrockners 1 entweder allein oder im Zusammenwirken mit einem externen Server und/oder externen Steuergeräten wie z.B. mobilen Steuergeräten, steuern kann. Insbesondere sind die Steuerungseinheit 6 und ggf. die weiteren Geräte zur Bestimmung einer Feuchtigkeit der Wäsche W, einer Wäscheart sowie zur Bestimmung der Beladung, insbesondere einer Bestimmung der Masse M_{dry} an trockener Wäsche W, hinsichtlich Hardware und Software sowie Speichermöglichkeiten geeignet ausgestaltet. Insbesondere ist die Steuerungseinheit 6 von Wäschetrockner 1 zur Durchführung des erfindungsgemäßen Verfahrens eingerichtet.

In der Wäschetrommel 2 sind parallel zu einer Drehachse D der Wäschetrommel 2 Wäschemitnehmer 7 angeordnet. Die Wäschetrommel 2 wird mittels eines Motors 8 angetrieben, z.B. mittels eines BLDC-Motors oder eines ASM-Motors. Die Steuerungseinheit 6 ist mit dem Motor 8 zu dessen Betrieb verbunden und kann eine Soll-Drehzahl nₛₒₗₗ vorgeben. Die Wäschetrommel 2 dreht sich dann mit einer Ist-Drehzahl nᵢₛₜ, wobei z.B. für den Fall eines BLDC-Motors nᵢₛₜ = nₛₒₗₗ gilt.

Die Fig. 2 (a) bis (d) zeigen als Schnittdarstellung in Frontansicht die mit viel Wäsche W (volle Beladung) beladene Wäschetrommel 2 in mehreren im Uhrzeigersinn verdrehten Drehstellungen. Aufgrund von Reibhaftung und der anwesenden Wäschemitnehmer 7 nimmt die sich drehende Wäschetrommel 2 die Wäsche W derart mit, daß diese sich ebenfalls dreht. Eine "Wäsche-"Drehzahl n_{w} der Wäsche W entspricht ungefähr der Ist-Drehzahl nᵢₛₜ der Wäschetrommel 2, so daß n_{w} ≈ nᵢₛₜ gilt. Der Wäscheschlupf nᵢₛₜ - n_{w} ist dadurch vernachlässigbar gering.

Die Fig. 3 (a) bis (d) zeigen analog zu Fig. 2 (a) bis (d) als Schnittdarstellung in Frontansicht die hier mit wenig Wäsche W (halbe Beladung) beladene Wäschetrommel 2 in mehreren im Uhrzeigersinn verdrehten Drehstellungen. Wenn die Wäschetrommel 2 mit wenig Wäsche befüllt ist, ist die Reibung zwischen der Wäschetrommel 2 und der Wäsche W kleiner. Zudem hat dann die Wäsche W Platz, sich unabhängig in der Wäschetrommel 2 zu bewegen. Aufgrund dieser unabhängigen Bewegung verringert sich die Wäschedrehzahl n_{w} weiter, da die Wäsche W nicht mehr so wirksam durch die Wäschetrommel 2 mitgenommen wird. Die Wäschedrehzahl n_{w} ist dann im Vergleich zur anliegenden Trommeldrehzahl nᵢₛₜ kleiner. Im Ergebnis ist der Schlupf der Wäsche nᵢₛₜ - n_{w} daher größer als bei voller Beladung der Wäschetrommel 2 mit Wäsche W.

In einer Ausführungsform kann - insbesondere nach einer vorgegebenen Anlaufdauer zum Erreichen einer konstanten Drehzahl der Wäschetrommel 2 - ein zeitlicher Verlauf eines elektrischen Widerstands R(t) dadurch aufgenommen werden, daß für eine vorgegebene Zeitdauer mit bekannten Methoden eine Vielzahl von Messwerten für den elektrischen Widerstand R(t) bestimmt werden. Dieser zeitliche Verlauf wird bei dieser Ausführungsform von der Steuerungseinheit 6 oder einer externen Auswerteeinheit in bekannter Weise mittels einer Fouriertransformation in ein Frequenzspektrum transformiert.

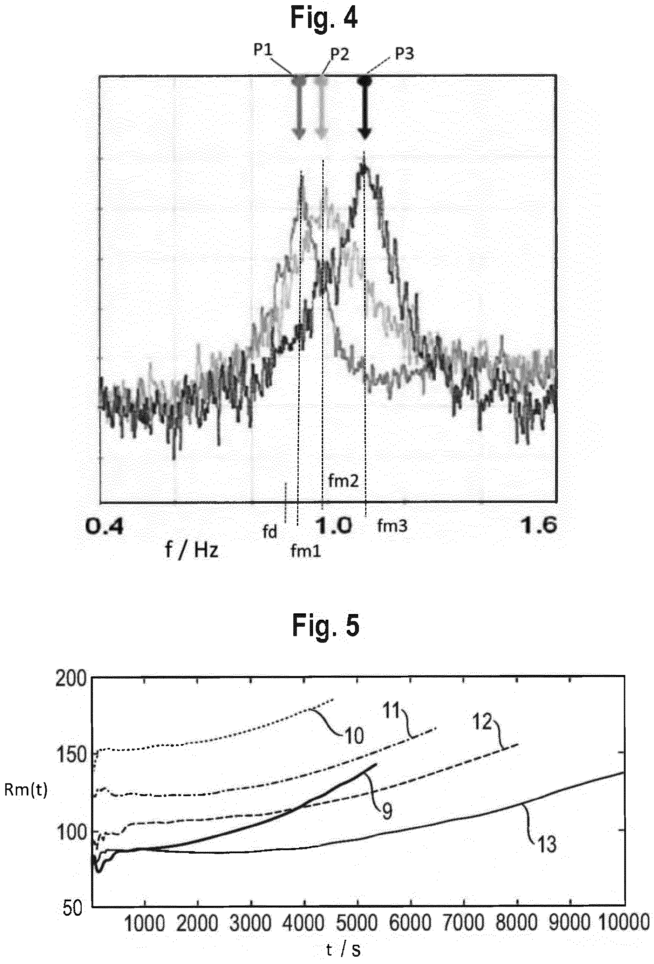

Fig. 4 zeigt für eine bevorzugte Ausführungsform der Erfindung beispielhaft in einem Diagramm drei Frequenzspektren bei unterschiedlichen Beladungen, hier 8, 4 und 2 kg Trockenmasse M_{dry}. Die Trommelfrequenz f_{d} beträgt etwa 84 Hz und ist im Spektrum auf der Frequenzachse markiert. Die drei Frequenzspektren weisen jeweils ein erstes Maximum (P1, P2, P3) bei einer Maximumfrequenz (fₘ₁, fₘ₂, fₘ₃) auf. Höhere Harmonische sind aufgrund des gewählten engen Ausschnitts in dem dargestellten Diagramm nicht zu sehen. Es zeigt sich, daß bei einer großen Beladung, hier 8 kg die Maximumfrequenz fₘ₁ relativ nahe bei der Trommelfrequenz f_{d} liegt. Dies ist auch anschaulich aus dem oben im Zusammenhang mit den Figuren 2 und 3 beschriebenen Sachverhalt klar, ist, da bei der großen Beladung die Wäsche wenig Bewegungsspielraum in der Trommel hat. Bei den geringeren Beladungen 4 und 2 kg hingegen ist die Maximumfrequenz fₘ₂, fₘ₃ zu höheren Frequenzen hin verschoben.

Aus dem Wert beispielsweise der Maximumfrequenz fₘ kann, etwa mittels entsprechender Kennlinien oder Tabellen, durch die Steuerungseinheit 6 die Masse M_{dry} der trockenen Wäsche in der Wäschetrommel ermittelt werden. Die Kennlinien bzw. Tabellen können auch auf einem externen Server hinterlegt sein. Die z.B. empirisch bestimmten Kennlinien oder Tabellen können beispielsweise eine Verknüpfung zwischen einer Maximumfrequenz fₘ und der zugehörigen Beladung aufweisen, wobei vorzugsweise die Wäscheart berücksichtigt wird, welche mit dem erfindungsgemäßen Verfahren bestimmt oder an dem Wäschetrockner 1 von einem Nutzer eingegeben sein kann. Die Beladung kann beispielsweise in 250g-Schritten aufgeführt sein. Mit dem erfindungsgemäßen Verfahren sind solche feinen Beladungsunterschiede zuverlässig erkennbar oder unterscheidbar.

Fig. 5 zeigt für unterschiedlich große Beladungen der Wäschetrommel mit Wäsche sowie unterschiedliche Wäschearten bei gleicher relativer Anfangsfeuchte Hᵣₑₗ, hier 60 %, die Änderung des akkumulierten Widerstandsmittelwertes Rₘ(t) in Abhängigkeit von der Zeit t, wobei hier die gesamte Trocknungsdauer betrachtet wird. Die flach mit der Zeit t ansteigenden Kurven 10 bis 13 beziehen sich auf ausschließlich aus Baumwolle bestehende Wäsche, während die mit der Zeit t stärker ansteigende Kurve 9 sich auf Wäsche bezieht, die aus einem Baumwoll-Polyester-Gemisch (65 % Polyester und 35 % Baumwolle) besteht. Insbesondere zeigt Kurve 9 den zeitabhängigen Widerstandsmittelwert Rₘ(t) für eine Beladung mit 3,5 kg Wäsche aus einem Baumwoll-Polyester-Gemisch (65 % Polyester, 35 % Baumwolle). Kurve 10 zeigt den zeitabhängigen Widerstandsmittelwert Rₘ(t) für eine Beladung mit 2,5 kg Wäsche aus Baumwolle und Kurve 11 den zeitabhängigen Widerstandsmittelwert Rₘ(t) für eine Beladung mit 4,0 kg Wäsche aus Baumwolle. Kurve 12 zeigt den zeitabhängigen Widerstandsmittelwert Rₘ(t) für eine Beladung mit 5,5 kg Wäsche aus Baumwolle und Kurve 13 den zeitabhängigen Widerstandsmittelwert Rₘ(t) für eine Beladung mit 8,0 kg Wäsche aus Baumwolle.

Die Kurven in Fig. 5 illustrieren, daß der Widerstandsmittelwert Rₘ(t) nach einer Einschwingphase, hier ca. 1000 s, wichtige Informationen über die Wäscheart liefert. Bei gleicher Anfangsfeuchte, hier als relative Anfangsfeuchte in % angegeben, und Trockenmasse M_{dry} der Wäsche ist der Widerstandsmittelwert Rₘ(t) deutlich geringer je höher der Synthetik-Anteil in der Wäsche ist. Gleiches gilt auch für den zeitlichen Anstieg, d.h. die Größe der Änderung ΔRₘ/Δt, während der Trocknungsphase.

Fig. 6 zeigt für unterschiedliche Beladungen mit Wäsche gleicher relativer Anfangsfeuchte den Zusammenhang zwischen dem anfänglichen Widerstandsmittelwert Rₛ, also dem gemessenen Widerstandsmittelwert Rₘ(t) nach einer Einschwingphase von 13 min und der Maximumfrequenz fₘ, die einem Amplitudenmaximum des Widerstands R(t) entspricht. Die Maximumfrequenz fₘ kann auch als "Peakfrequenz der 1. Harmonischen des Spektrums des Elektrodensignals" bezeichnet werden. Eingekreist sind die Werte für eine Beladung mit Wäsche aus einem Baumwoll-Polyester-Gemisch (65 % Polyester, 35 % Baumwolle). Gezeigt sind außerdem Werte für unterschiedliche Beladungen mit Wäsche aus Baumwolle. Die Werte bei unterschiedlichen Frequenzen entsprechen, wie hierin ausgeführt, unterschiedlichen Beladungen M_{dry} mit trockener Wäsche.

Aus Fig. 6 ist erkennbar, daß eine Beladung mit Wäsche aus einem Baumwoll-Polyester-Gemisch sich gut von Beladungen mit Wäsche aus Baumwolle unterscheiden lässt, welche hier einen linearen Zusammenhang zwischen dem anfänglichen Widerstandsmittelwert Rₛ und der Frequenz, hier Maximumfrequenz fₘ, zeigt.

Fig. 7 zeigt für unterschiedliche Beladungen mit Wäsche gleicher Wäscheart, hier Baumwolle, aber unterschiedlicher relativer Anfangsfeuchte den Zusammenhang zwischen dem anfänglichen Widerstandsmittelwert Rₛ und der Maximumfrequenz fₘ, die einem Amplitudenmaximum des Widerstands R(t) entspricht.

Ein Vergleich der Figuren 6 und 7 zeigt, daß Beladungen mit Wäsche aus einem Baumwoll-Polyester-Gemisch, auch als "Delicates-Posten" bezeichnet, mit geringer Anfangsfeuchte und Beladungen mit Wäsche aus Baumwolle ("reine Baumwollposten") ähnlicher Masse an trockener Wäsche, aber mit hoher Anfangsfeuchte vergleichbare Wertepaare (Widerstandsmittelwert Rₛ, Maximumfrequenz fₘ) aufweisen, so daß aus diesen beiden Werten allein eine Abschätzung eines Synthetikanteils in der Beladung M_{dry} mit Wäsche nicht möglich ist. Wird allerdings der zeitliche Verlauf des Widerstandsmittelwerts Rₘ(t) herangezogen, wie er beispielsweise in der Fig. 5 für unterschiedliche Beladungsmengen M_{dry} und Wäschearten dargestellt ist, so kann eine klare Unterscheidung zwischen den Wäschearten vorgenommen werden. Denn wie anhand von Fig. 5 gezeigt, ist der zeitliche Anstieg, d.h. die Größe der Änderung ΔRₘ/Δt, während der Trocknungsphase für einen Delicates-Posten stark erhöht. Durch geeignete Versuche lässt sich zudem ein Zusammenhang zwischen dem Synthetikanteil im Delicates-Posten, z.B. einem Polyester-Anteil, und der Größe der Änderung ΔRₘ/Δt, während der Trocknungsphase ermitteln, so daß sich der Synthetik-Anteil in der Wäsche durch Regression ermitteln lässt. Somit können mittels der Erfindung die für einen Trocknungsprozess wesentlichen Eigenschaften der Wäsche, d.h. Anfangsfeuchte, Beladungsmenge M_{dry} und Wäscheart, bestimmt werden.

### Bezugszeichenliste

- 1: Wäschetrockner
- 2: Wäschetrommel
- 3: Widerstandsmesseinrichtung
- 4: Messelektroden
- 5: Lagerschild
- 6: Steuerungseinheit
- 7: Wäschemitnehmer
- 8: Motor; Antriebsmotor der Wäschetrommel
- 9: Zeitabhängiger Widerstandsmittelwert Rₘ(t) für eine Beladung mit 3,5 kg Wäsche aus einem Baumwoll-Polyester-Gemisch (65 % Polyester, 35 % Baumwolle); relative Anfangsfeuchte 60 %
- 10: Zeitabhängiger Widerstandsmittelwert Rₘ(t) für eine Beladung mit 2,5 kg Wäsche aus Baumwolle; relative Anfangsfeuchte 60 %
- 11: Zeitabhängiger Widerstandsmittelwert Rₘ(t) für eine Beladung mit 4,0 kg Wäsche aus Baumwolle; relative Anfangsfeuchte 60 %
- 12: Zeitabhängiger Widerstandsmittelwert Rₘ(t) für eine Beladung mit 5,5 kg Wäsche aus Baumwolle; relative Anfangsfeuchte 60 %
- 13: Zeitabhängiger Widerstandsmittelwert Rₘ(t) für eine Beladung mit 8,0 kg Wäsche aus Baumwolle; relative Anfangsfeuchte 60 %
- A: Amplitude; Amplitudenmaximum
- D: Drehachse der Wäschetrommel
- f: Frequenz
- nᵢₛₜ: Ist-Drehzahl der Wäschetrommel
- n_{w}: Wäschedrehzahl
- Rₘ(t): Widerstandsmittelwert
- Rₛ: anfänglicher Widerstandsmittelwert
- W: Wäsche
- Pi: Frequenzspitze i (i = 1, ..., 3)

## Patentansprüche

1. Verfahren zur Bestimmung von Wäscheeigenschaften in einem Wäschetrockner (1) mit einer horizontal drehbaren Wäschetrommel (2) und einer Widerstandsmesseinrichtung (3) mit zwei Messelektroden (4), sowie einer Steuerungseinheit (6), bei dem
a) der elektrische Widerstand R zwischen den Messelektroden bei sich drehender Wäschetrommel (2) in Abhängigkeit von der Zeit t gemessen wird;
b1) der in Abhängigkeit von der Zeit t gemessene elektrische Widerstand R(t) in ein Frequenzspektrum transformiert wird und die einem Amplitudenmaximum des elektrischen Widerstands R(t) entsprechende Maximumfrequenz fₘ bestimmt wird
b2) der in Abhängigkeit von der Zeit t gemessene elektrische Widerstand R(t) über einen vorgegebenen Zeitraum Δt gemittelt und als zeitabhängiger Widerstandsmittelwert Rₘ(t) registriert wird;
c) der zeitabhängige Widerstandsmittelwert Rₘ(t) in Hinblick auf einen anfänglichen Widerstandsmittelwert Rs und/oder eine zeitliche Änderung ΔRₘ/Δt des zeitabhängigen Widerstandsmittelwertes Rₘ(t) ausgewertet wird
d1) für eine vorgegebene anfängliche Wäschefeuchte Hs durch Auswertung des in Schritt c) bestimmten anfänglichen Widerstandsmittelwert Rs und der Maximumfrequenz fₘ anhand eines für verschiedene anfängliche Wäschefeuchten Hₛ und verschiedene Wäschearten hinterlegten Zusammenhangs zwischen dem anfänglichen Widerstandsmittelwert Rs und der Maximumfrequenz fₘ die Wäscheart bestimmt wird, oder
d2) für eine vorgegebene Wäscheart anhand eines für anfängliche Wäschefeuchten Hs und verschiedene Wäschearten hinterlegten Zusammenhangs zwischen dem Mittelwert Rm(t) des Widerstands und der Maximumfrequenz fm sowie der Trockenmasse, ein Zusammenhang zwischen dem anfänglichen Widerstandsmittelwert Rs und der Maximumfrequenz fₘ in Hinblick auf eine anfängliche Wäschefeuchte Hs und die Trockenmasse M_{dry} ausgewertet wird.

2. Verfahren nach Anspruch 1, **dadurch gekennzeichnet, daß** der anfängliche Widerstansmittelwert Rₛ zu einem bestimmten Zeitpunkt tₛₑₜ nach Ablauf einer Einschwingphase nach Beginn des Trocknungsprozesses gebildet wird.

3. Verfahren nach Anspruch 2, **dadurch gekennzeichnet, daß** die Einschwingphase 1000 Sekunden beträgt.

4. Verfahren nach einem der vorhergehenden Ansprüche, **dadurch gekennzeichnet, daß** zum Transformieren eine FFT-Transformation durchgeführt wird.

5. Verfahren nach einem der vorhergehenden Ansprüche, **dadurch gekennzeichnet, daß** nach Schritt d2) anhand eines hinterlegten Zusammenhang zwischen der Wäscheart, und der Größe der Änderung ΔRₘ/Δt, während der Trocknungsphase durch Regression zusätzlich die Wäscheart ermittelt wird.

6. Verfahren nach einem der vorhergehenden Ansprüche, **dadurch gekennzeichnet, dass** an die Messelektroden (4) ein rechteckiges Wechselspannungssignal angelegt wird.

7. Verfahren nach einem der vorhergehenden Ansprüche, **dadurch gekennzeichnet, daß** die Wäschetrommel (2) mit einer konstanten Drehzahl n betrieben wird.

8. Verfahren nach einem der vorhergehenden Ansprüche, **dadurch gekennzeichnet, daß** für ein ausgewähltes Trocknungsprogramm unter Berücksichtigung der Wäscheart, der Beladung M_{dry} der Wäschetrommel (2) mit trockener Wäsche und der anfänglichen Wäschefeuchte Hₛ die restliche Trocknungszeit ermittelt und einem Benutzer des Wäschetrockners (1) angezeigt wird.

9. Wäschetrockner (1) mit einer horizontal drehbaren Wäschetrommel (2) und einer Widerstandsmesseinrichtung (3) mit zwei Messelektroden (4), sowie einer Steuerungseinheit (6), **dadurch gekennzeichnet, daß** die Steuerungseinheit (6) zur Durchführung des Verfahrens nach einem der Ansprüche 1 bis 8 eingerichtet ist.

## Claims

1. Method for determining laundry properties in a tumble dryer (1) with a horizontally rotatable laundry drum (2) and a resistance measuring device (3) with two measuring electrodes (4), and a control unit (6), in which
a) the electrical resistance R between the measuring electrodes is measured as a function of the time t while the laundry drum (2) is rotating;
b1) the electrical resistance R(t) measured as a function of the time t is transformed into a frequency spectrum and the maximum frequency fₘ corresponding to an amplitude maximum of the electrical resistance R(t) is determined
b2) the electrical resistance R(t) measured as a function of the time t is averaged over a predetermined period of time Δt and registered as a time-dependent resistance mean value Rₘ(t);
c) the time-dependent resistance mean value Rₘ(t) is evaluated in respect of an initial resistance mean value Rs and/or a temporal change ΔRₘ/Δt of the time-dependent resistance mean value Rₘ(t)
d1) the type of laundry is determined for a predetermined initial laundry humidity Hs by evaluating the initial resistance mean value Rs determined in step c) and the maximum frequency fₘ on the basis of an association, stored for various initial laundry humidities Hₛ and different types of laundry, between the initial resistance mean value Rs and the maximum frequency fₘ, or
d2) an association between the initial resistance mean value Rs and the maximum frequency fₘ is evaluated in respect of an initial laundry humidity Hs and the dry weight M_{dry} for a predetermined type of laundry on the basis of an association, stored for initial laundry humidities Hs and different types of laundry, between the mean value Rm(t) of the resistance and the maximum frequency fm and the dry weight.

2. Method according to claim 1, **characterised in that** the initial resistance mean value Rₛ is formed at a specific point in time tₛₑₜ after an oscillation phase elapses after the drying process starts.

3. Method according to claim 2, **characterised in that** the oscillation phase is 1000 seconds.

4. Method according to one of the preceding claims, **characterised in that** an FFT transformation is carried out for transformation purposes.

5. Method according to one of the preceding claims, **characterised in that** after step d2) the type of laundry is additionally determined on the basis of a stored association between the type of laundry and the size of the change ΔRm/Δt during the drying phase by means of regression.

6. Method according to one of the preceding claims, **characterised in that** a rectangular alternating voltage signal is applied to the measuring electrodes (4).

7. Method according to one of the preceding claims, **characterised in that** the laundry drum (2) is operated with a constant rotational speed n.

8. Method according to one of the preceding claims, **characterised in that** the remaining drying type is determined for a selected drying program by taking into consideration the type of laundry, the load M_{dry} of the laundry drum (2) with dry laundry and the initial laundry humidity Hₛ and is shown to a user of the tumble dryer (1).

9. Tumble dryer (1) with a horizontally rotatable laundry drum (2) and a resistance measuring device (3) with two measuring electrodes (4) and a control unit (6), **characterised in that** the control unit (6) is designed to carry out the method according to one of claims 1 to 8.

## Revendications

1. Procédé de détermination de propriétés du linge dans un sèche-linge (1) comprenant un tambour à linge (2) tournant horizontalement et un dispositif de mesure de résistance (3) comportant deux électrodes de mesure (4), ainsi qu'une unité de commande (6), dans lequel :
a) la résistance électrique R est mesurée entre les électrodes de mesure en fonction du temps t lorsque le tambour à linge (2) tourne,
b1) la résistance électrique R(t) mesurée en fonction du temps t est transformée en un spectre de fréquences, et la fréquence maximale fₘ correspondant à un maximum d'amplitude de la résistance électrique R(t) est déterminée,
b2) la résistance électrique R(t) mesurée en fonction du temps t est moyennée sur une période Δt prédéterminée et mémorisée en tant que valeur moyenne de résistance en fonction du temps Rₘ(t),
c) la valeur moyenne de résistance en fonction du temps Rₘ(t) est évaluée en ce qui concerne une valeur moyenne de résistance initiale Rs et/ou une variation dans le temps ΔRₘ/Δt de la valeur moyenne de résistance en fonction du temps Rₘ(t),
d1) pour une humidité du linge initiale prédéterminée Hs par une évaluation de la valeur moyenne de résistance initiale Rs déterminée dans l'étape c) et de la fréquence maximale fₘ, le type de linge est déterminé sur la base d'une relation mémorisée, pour différentes humidités de linge initiales Hₛ et différents types de linge, entre la valeur moyenne de résistance initiale Rs et la fréquence maximale fₘ, ou
d2) pour un type de linge prédéterminé sur la base d'une relation mémorisée, pour différentes humidités de linge initiales Hₛ et différents types de linge, entre la valeur moyenne de la résistance Rm(t) et la fréquence maximale fₘ ainsi que la masse sèche, une relation entre la valeur moyenne de résistance initiale Rs et la fréquence maximale fₘ est évaluée concernant une humidité du linge initiale Hs et la masse sèche M_{dry}.

2. Procédé selon la revendication 1, **caractérisé en ce que** la valeur moyenne de résistance initiale Rₛ est constituée à un instant déterminé tₛₑₜ après l'expiration d'une phase d'oscillation après le début du processus de séchage.

3. Procédé selon la revendication 2, **caractérisé en ce que** la phase d'oscillation dure 1000 secondes.

4. Procédé selon l'une des revendications précédentes, **caractérisé en ce qu'**une transformation FFT est exécutée à titre de transformation.

5. Procédé selon l'une des revendications précédentes, **caractérisé en ce qu'**après l'étape d2), le type de linge est déterminé en outre sur la base d'une relation mémorisée entre le type de linge et la grandeur de la variation ΔRₘ/Δt, pendant la phase de séchage par une régression.

6. Procédé selon l'une des revendications précédentes, **caractérisé en ce qu'**un signal de tension alternative rectangulaire est appliqué sur les électrodes de mesure (4).

7. Procédé selon l'une des revendications précédentes, **caractérisé en ce que** le tambour à linge (2) fonctionne à une vitesse de rotation n constante.

8. Procédé selon l'une des revendications précédentes, **caractérisé en ce que**, pour un programme de séchage sélectionné, en tenant compte du type de linge, du chargement M_{dry} du tambour à linge (2) avec du linge sec et de l'humidité du linge initiale Hs, le temps de séchage restant est déterminé et indiqué à un utilisateur du sèche-linge (1).

9. Sèche-linge (1) comprenant un tambour à linge (2) tournant horizontalement et un dispositif de mesure de résistance (3) comprenant deux électrodes de mesure (4) ainsi qu'une unité de commande (6),
**caractérisé en ce que** l'unité de commande (6) est configurée pour exécuter le procédé selon l'une des revendications 1 à 8.
